# EUROPÄISCHE PATENTANMELDUNG

(11) **EP 4 553 127 A1**
(43) Veröffentlichungstag der Anmeldung: **14.05.2025**
(21) Anmeldenummer: 24210122.8
(22) Anmeldetag: 31.10.2024
(51) Int. Cl.: C09J 167/02, C09J 167/04

(54) **BIOBASIERTER UMWELTFREUNDLICHER SCHMELZKLEBSTOFF**

(30) Priorität: 07.11.2023 DE 102023130729
(71) Anmelder: Thüringisches Institut Für Textil- Und Kunststoff- Forschung E.V., 07407 Rudolstadt (DE)
(72) Erfinder: Krypczyk, Andreas, 07407 Rudolstadt (DE)
(74) Vertreter: Plate, Jürgen

(57) **Zusammenfassung**

Die Erfindung beschreibt einen umweltfreundlichen Schmelzklebstoff auf der Basis nachwachsender Rohstoffe. Die Schmelzklebstoffformulierung setzt sich aus biobasierten Polyestern, speziell einer Kombination von Polylactid und Polybutylensuccinat, sowie aus Harzen, Weichmachern und Stabilisatoren zusammen, optional können weitere Additive zugesetzt werden, zum Beispiel Wachse, pyrogene Kieselsäure, Kalk oder Farbpigmente. Die eingesetzten Rohstoffe sind nachhaltig, biologisch abbaubar und ungefährlich für die Natur. Der Klebstoff weist eine sehr gute Haftung zu Holz, Papier, Karton und einigen überwiegend unpolaren Kunststoffen wie PMMA, ABS, PC, PLA oder PET auf und kann mit den gängigen Anlagen appliziert werden.

## Beschreibung

Die stoffliche Nutzung nachwachsender Rohstoffe gewinnt zunehmend an Bedeutung. Antrieb für diese Entwicklung sind unter anderem der Klimawandel und die Notwendigkeit erdölunabhängige Quellen zu verwenden. Die Erfindung beschreibt einen umweltfreundlichen Schmelzklebstoff auf der Basis der biobasierten Polyester Polylactid (PLA) und Polybutylensuccinat (PBS).

Ein Klebeband auf Basis von nachwachsenden Rohstoffen ist aus der DE 20 2006 001 693 U1 bekannt. Es umfasst eine Folie aus einem Blend von Polymilchsäure (PLA) und mindestens einem aliphatisch-aromatischen Copolyester. Auf die Folie wird eine Schicht aus einer pumpfähigen, wasserhaltigen Klebemasse aufgetragen. Die Schicht wird anschließend getrocknet. Konkret offenbart ist ein Haftklebstoff, der Polymilchsäure, epoxidiertes Sojaöl, Polybutylensuccinat und Citronensäure enthält und vor dem Auftragen verflüssigt wird. Schmelzklebstoffe (Hot Melt Klebstoffe) sind dagegen lösemittel- und wasserfreie Klebstoffe basierend auf thermoplastischen Polymeren. Diese Polymere sind bei Raumtemperatur fest, sie erweichen beim Erwärmen zu viskosen Flüssigkeiten und können somit als Schmelze appliziert werden. Beim Abkühlen auf Raumtemperatur verfestigen sie sich reversibel unter gleichzeitigem Aufbau der Klebfestigkeit. Weitere Bestandteile klassischer Schmelzklebstoffe sind Harze, Wachse, Weichmacher, Stabilisatoren und Füllstoffe. Die gängigsten Anwendungsgebiete für klassische Schmelzklebstoffe sind Verpackungsindustrie, Hygieneindustrie, Buchbinderei, Holz- und Möbelindustrie und der Do-it-Yourself Bereich.

Die derzeit kommerziell verfügbaren teilbiobasierten Schmelzklebstoffe haben einen hohen Anteil an biobasierten Harzen und Wachsen. Der Einsatz von biobasierten Harzen und Wachsen ist schon seit Jahrzehnten Stand der Technik. Die eingesetzten Basispolymere sind jedoch ausschließlich erdölbasiert.

Die Firma Intercol BV vertreibt einen biobasierten Schmelzklebstoff, der zu 70 % aus natürlichen Rohstoffen besteht.

Die Firma Jowat SE vertreibt unter der Handelsbezeichnung ^{®}Jowatherm GROW einen biobasierten Schmelzklebstoff, der bis zu 50% aus natürlichen Rohstoffen besteht.

Die Firma Henkel vertreibt unter der Handelsbezeichnung ^{®}Technomelt Supra ECO einen biobasierten Schmelzklebstoff. Trotz des hohen Anteils nachwachsender Rohstoffe ist das Grundpolymer synthetischer Basis.

Das Patent WO2015153226A1 beschreibt einen biobasierten Schmelzklebstoff. Das Grundpolymer ist PLA. Daneben werden keine weiteren biobasierten Polymere, sowie keine biobasierten Kolophonium- oder Terpenharze als Tackifier oder biobasierte Weichmacher eingesetzt.

Das Patent WO2013162058A1 beschreibt einen umweltfreundlichen Schmelzklebstoff. Neben biobasierten Rohstoffen werden hier auch petrobasierte Rohstoffe beschrieben.

Das Patent WO2002053376A2 beschreibt einen biologisch abbaubaren und kompostierbaren Schmelzklebstoff auf der Basis von PLA. Daneben werden keine weiteren biobasierten Polymere, sowie keine biobasierten Kolophonium- oder Terpenharze als Tackifier eingesetzt.

Das Patent US9428645B2 beschreibt einen umweltfreundlichen Schmelzklebstoff auf der Basis biobasierter und petrobasierter Rohstoffe.

Gegenstand der US 2014/0329065 A1 sind bioabbaubare Folien mit einer bedruckten Schicht, einer Harzschicht, einer Haftschicht und gegebenenfalls einer Trägerschicht. Letztere besteht vorzugsweise aus Papier, einem Baumwollstoff oder einem Faservlies. Polylactid (PLA) ist Bestandteil der Harzschicht und/oder der Haftschicht. Sie kann mit einer Vielzahl an natürlichen oder synthetischen Polymeren abgemischt sein, darunter auch Polybutylensuccinat (PBS). Zusätzlich können noch Weichmacher, wie Citronensäure, Citrate, epoxidierte Pflanzenöle, Fettsäureester, Polyethylenglykol oder Glycerinester vorhanden sein. Die Haftschicht bildet eine Außenseite der bioabbaubaren Folie. Die Verträglichkeit biobasierter Polyester wie PLA oder PBS mit den kommerziell eingesetzten Harzen ist in der Regel unzureichend. Des Weiteren sind die Biopolyester im Vergleich zu den üblicherweise eingesetzten Polymeren wie EVA oder PO spröde und hochviskos, sodass es bisher nicht gelungen ist einen kommerziell vergleichbaren Schmelzklebstoff auf der Basis biobasierter Polyester entwickeln.

PLA und PBS werden derzeit nicht zur Formulierung von Schmelz-, und Schmelzhaftklebstoffen verwendet. Als Basispolymere werden ausschließlich Ethylenvinylacetat (EVA), bestimmte Polyolefine (PO) und Styrol-Butadien-Copolymere (SBC) verwendet. Diese Polymere wurden in den vergangenen Jahrzehnten für Schmelzklebstoffe optimiert.

PLA und PBS werden derzeit überwiegend für Spritzgussbauteile und für flexible Verpackungen eingesetzt. Im Gegensatz zu der Menge an kommerziell verfügbaren Typen dieser Polymere steht nur eine Hand voll unterschiedlicher Typen von PBS und einige Typen von PLA zur Verfügung. Problematisch sind die zu geringere Flexibilität, der hohe Schmelzpunkt und die hohe Schmelzviskosität im Vergleich zu den üblichen Polymeren, welche alle eine große Bedeutung für Schmelzklebstoffe haben. Darüber hinaus stellt die Verträglichkeit mit den übrigen Bestandteilen (Harze, Wachse) ein weiteres Problem dar. Die Verträglichkeit mit dem Polymer ist ebenso zu beachten wie der damit verknüpfte Einfluss auf das Abbindeverhalten, das Fließ- und Erstarrungsverhalten sowie die Wechselwirkungen der Polymerkomponenten an der Phasengrenze. Diese Faktoren beeinflussen die bei der Herstellung entstehende Morphologie wesentlich. Anzahl, Größe und Form der vorliegenden Phasen sowie ihre gegenseitigen Wechselwirkungen steuern maßgeblich die makroskopischen Eigenschaften. Nur bei einer guten Verträglichkeit, das heißt ohne Phasentrennung oder Entmischung der einzelnen Komponenten, ist die Formulierung für die Verwendung als Schmelzklebstoff geeignet.

Zudem sind die biobasierten Polyester anfällig für hydrolytischen Kettenabbau, welcher vor allem bei höheren Temperaturen über längere Zeiträume auftritt.

Aufgabe der Erfindung ist es, einen Schmelzklebstoff auf Basis von PLA und PBS herzustellen, welcher die im Stand der Technik beschriebenen Nachteile wie geringe Flexibilität und den hohen Schmelzpunkt überkommt, dabei aber vollständig biologisch abbaubar sein soll.

Die Aufgabe der Erfindung wird dadurch gelöst, dass als Basispolymer für den Schmelzklebstoff eine Kombination von PLA und PBS genutzt wird, welche mit darauf abgestimmten Harzen, Weichmachern und Stabilisatoren zu einem vollständig biobasierten Schmelzklebstoff verarbeitet wird. Optional können weitere Füllstoffe zugesetzt werden, wie zum Beispiel Wachse, pyrogene Kieselsäure, Kalk oder Farbpigmente.

Gegenstand der Erfindung ist somit eine Schmelzklebstoff-Formulierung umfassend:
mindestens ein Polylactid mit einer Glas-Übergangstemperatur von mehr als 50 °C, einem Schmelzflussindex von mehr als 25 g/10 min, gemessen bei einer Temperatur von 210 °C und einer Belastung mit 2,16 kg, einem gewichtsmittleren Molekulargewicht M_{w} im Bereich von 120.000 bis 280.000 g/mol und einem Hansen-Löslichkeitsparameter von 19,2 bis 21,1 (J/cm³)^{0,5}, wobei der Anteil des mindestens einen Polylactids 5 bis 45 Gew.-% beträgt, bezogen aus das Gesamtgewicht der Schmelzklebstoff-Formulierung;
mindestens ein Polybutylensuccinat mit einem Schmelzflussindex von 3 bis 26 g/10 min, gemessen bei 190 °C und einer Belastung mit 2,16 kg, einem gewichtsmittleren Molekulargewicht M_{w} im Bereich von 60.000 bis 190.000 g/mol und einem Hansen-Löslichkeitsparameter von 20,1 bis 21,2 (J/cm³)^{0,5}, wobei der Anteil des mindestens einen Polybutylensuccinats 10 bis 55 Gew.-% beträgt, bezogen auf das Gesamtgewicht der Schmelzklebstoff-Formulierung;
mindestens ein natürlich vorkommendes Harz mit einer Schmelztemperatur zwischen 60 und 150 °C, einer Schmelzviskosität von 80 bis 24.000 mPa·s bei 140 °C und einem Hansen-Löslichkeitsparameter zwischen 16,0 und 21 (J/cm³)^{0,5}, wobei der Anteil des mindestens einen natürlich vorkommenden Harzes 30 bis 55 Gew.-% beträgt, bezogen auf das Gewicht der Schmelzklebstoff-Formulierung;
mindestens ein Citronensäuretri(C2-C8)alkylester oder Acetylcitronensäuretri(C2-C8)alkylester als Weichmacher in einem Anteil von 5 bis 15 Gew.-%, bezogen auf das Gesamtgewicht der Schmelzklebstoff-Formulierung; und
mindestens ein epoxidiertes Pflanzenöl als Stabilisator in einem Anteil von 0,5 bis 1,5 Gew.-%, bezogen auf das Gesamtgewicht der Schmelzklebstoff-Formulierung.

Sofern es nicht anders angegeben wird sind alle Prozentangaben in diesem Patent Gewichtsprozente bezogen auf die Gesamtmasse der jeweiligen Formulierung.

Oberste Priorität für die Formulierung der Schmelzklebstoffe auf der Basis von PLA und PBS ist die Verträglichkeit zu den übrigen Klebstoffkomponenten. Die Verträglichkeit kann über den Hansen-Löslichkeitsparameter bestimmt werden. Dieser basiert auf der Grundidee, dass sich Gleiches in Gleichem löst und wird in (J/cm³)^{0.5} angegeben. Es werden daher bevorzugt Rohstoffe mit dem gleichen oder einem in der Nähe liegenden Löslichkeitsparameter ausgewählt. Zwei Komponenten sind auch bei erhöhter Temperatur nur ausreichend miteinander mischbar, wenn sich ihre Löslichkeitsparameter um nicht mehr als 1,0 (J/cm³)^{1/2} unterscheiden.

In der Praxis wird die Verträglichkeit optisch bei der Schmelze und beim Feststoff bewertet. Bei einer sichtbaren Phasentrennung der Materialien wird die Mischung als nicht verträglich eingestuft.

Das Basispolymer einer Schmelzklebstoff-Formulierung definiert die wesentlichen Eigenschaften des Schmelzklebstoffes, wie Verarbeitungstemperatur, Adhäsion, chemische und hydrolytische Beständigkeit, Erweichungsbereich und den Verfestigungsmechanismus. Als Basispolymere für die erfindungsgemäße Klebstoffformulierung wird eine Kombination aus PLA und PBS eingesetzt. Durch diese Kombination werden die Eigenschaften beider Polymere kombiniert, wodurch die Nachteile der einzelnen Polymere überkommen und die positiven Merkmale hervorgehoben werden. Die Basispolymere werden in einem Anteil von 40 bis 65% eingesetzt.

Polylactid (PLA) ist ein teilkristallines bis vollständig amorphes biobasiertes und biologisch abbaubares Polymer. Kommerziell verfügbares PLA hat eine Glasübergangstemperatur von 53°C bis 64°C, einen Schmelzbereich von 150 bis 180 °C und eine Schmelzflussrate (melt flow rate, MFR) von 6 bis 80 g/10 min [210°C / 2,16kg]. Der Hansen-Löslichkeitsparameter liegt bei 19,2 - 21,1 (J/cm³)^{0,5}. Für die Erfindung geeignetes PLA hat eine möglichst hohe Glasübergangstemperatur, bevorzugt >50°C und eine möglichst hohe MFR, bevorzugt >25 g/10 min [210°C / 2,16kg). Für die Erfindung hat sich PLA mit einem mittleren Molekulargewicht M_{w} im Bereich von 120.000 bis 280.000 g/mol als besonders geeignet erwiesen. Polybutylensuccinat (PBS) ist ein kristalliner biobasierter und biologisch abbaubarer Kunststoff. PBS hat eine Glasübergangstemperatur von -40°C bis -31°C, einen Schmelzbereich von 85 bis 115 °C und einen MFR von 3 - 26 g/10 min [190°C / 2,16kg). Der Hansen-Löslichkeitsparameter liegt bei 20,9 (J/cm³)^{0,5}. Für die Erfindung wird PBS mit einer gewichtsmittleren Molmasse M_{w} im Bereich von 60.000 bis 190.000 g/mol bevorzugt.

Schmelzklebstoffe auf Basis von PBS besitzen hohe Wärmestandfestigkeit aber schlechte Klebeigenschaften. Schmelzklebstoffe auf Basis von PLA hingegen besitzen gute Klebeeigenschaften, aber nur geringe Wärmeformbeständigkeit. Durch die erfindungsgemäße Kombination dieser beiden Polymere, können Schmelzklebstoffe hergestellt werden, die sowohl hohe Wärmeformstabilität als auch ausgezeichnete Klebeeigenschaften besitzen.

Als besonders Vorteilhaft hat sich eine Kombination aus 50-75% eines niedrigschmelzenden PBS (85°C) und 25-50% eines hochschmelzenden PBS (115°C) erwiesen. Dabei kann die hohe Wärmestandfestigkeit des hochschmelzenden PBS mit den besseren Klebeigenschaften des niedrigschmelzenden PBS optimal vereint werden.

Für die Klebstoffformulierung werden speziell für PLA und PBS angepasste Harze verwendet. Diese biobasierten Harze werden zur Erhöhung der Klebrigkeit (Tack), der Adhäsion, der Wärmestandfestigkeit und zur Reduktion der Verarbeitungsviskosität zugesetzt. Als besonders geeignet haben sich Harze auf Basis von Kolophonium und Terpenen erwiesen.

Kolophonium ist ein aus Baumharz gewonnenes Produkt. Aufgrund seiner amorphen Struktur besitzt Kolophonium keinen definierten Schmelzpunkt und ist sehr spröde. Die Bandbreite reicht von flüssigen bis festen Harzen mit einer durchschnittlichen Schmelztemperatur zwischen 60 und 150 °C und einer Viskosität von 80 bis 24.000 mPa·s bei 140°C. Der Löslichkeitsparameter kommerzieller Kolophoniumharze liegt in der Regel zwischen 17,0 und 19,5 (J/cm³)^{0,5}. Für die Erfindung wird aber eine spezielle Formulierung mit einem Löslichkeitsparameter von mehr als 19,0 (J/cm³)^{0,5} bevorzugt zwischen 19,2 bis 21,1 (J/cm³)^{0,5}, verwendet, um eine gute Verträglichkeit mit dem Biopolyester zu gewährleisten. Zudem trägt das Harz zur Flexibilisierung der Klebstoffformulierung für die meisten Anwendungen bei. Verantwortlich dafür ist der Erweichungspunkt von ca. 25°C - 35°C bei dem das Harz eine besonders flexible Struktur aufweist und somit die Gesamtformulierung für Anwendungen in diesem Temperaturbereich optimiert.

Terpene sind Kohlenwasserstoffverbindungen die als sekundäre Inhaltsstoffe nahezu ausschließlich in Pflanzen vorkommen. Die für Harze in Schmelzklebstoffen wichtigsten Vertreter der Terpene sind α-Pinen, β-Pinen und D-Limonen. Polyterpene bzw. Terpenharze sind aus einer Vielzahl von Isopreneinheiten (C₅H₈)ₙ aufgebaut. Die Terpene werden mittels thermischer Oxidationsverfahren in Harze umgewandelt. Terpenharze sind amorph mit einem Schmelzbereich von 60°C bis 170°C. Der Löslichkeitsparameter kommerzieller Terpenharze liegt zwischen 16,2 und 20, 9 (J/cm³)^{0,5}. Für die Erfindung bevorzugtes Terpenharz hat einen Hansen-Löslichkeitsparameter von > 20,0 (J/cm³)^{0,5}.

Für die Erfindung werden bei Raumtemperatur feste Harze mit einer Schmelztemperatur von weniger als 120 °C und einer Schmelzviskosität von weniger als 1.000 mPa·s bei 160 °C bevorzugt. Die Harze sind bevorzugt so ausgelegt, dass sie bei Raumtemperatur eine hohe Schlagzähigkeit und vergleichbar hohe Flexibilität aufweisen. Außerdem zeichnen sich die bevorzugten Harze durch einen exzellenten Hot-Tack aus, wodurch trotz der geringen Erweichungstemperatur eine hohe Wärmestandfestigkeit erreicht werden kann. Die biobasierten Harze machen in den erfindungsgemäßen Klebstoffformulierungen 30 bis 65% der Gesamtmasse, bevorzugt 40 bis 55% der Gesamtmasse aus.

Für die Flexibilisierung der Biopolyester werden geeignete Weichmacher eingesetzt. Diese dienen der Flexibilisierung der Klebstoffe und senken die Verarbeitungstemperatur. Die Weichmacher können entweder mit PLA und PBS vorcompoundiert oder bei der Herstellung des Schmelzklebstoffes direkt eingearbeitet werden.

Für die Erfindung geeignete biobasierte Weichmacher sind bestimmte Citrate. Hierzu gehören Triethylcitrat, besonders geeignet sind längerkettige Citronensäureester wie Acetyltributylcitrat und Tributylcitrat, da diese Temperaturstabiler sind und eine geringere Neigung zur Migration haben. Die Weichmacher werden vorzugsweise mit dem PLA vorcompoundiert. Als besonders effizient hat sich ein Verhältnis von 10-25% Weichmacher, bezogen auf den Anteil an PLA in der Klebstoffformulierung, herausgestellt. Durch den Zusatz von Weichmachern können das E-Modul, die Zugfestigkeit und die Shore-Härte reduziert werden, so dass das modifizierte PLA die mechanischen Eigenschaften von kommerziellen EVA erreicht. Vor allem die Zugdehnung wird stark erhöht. Dies führt zu einer ausreichenden Flexibilisierung der sonst sehr harten Schmelzklebstoffe mit Polylactid als Bestandteil.

Ein Zusatz von Weichmachern zu PBS führt zu einer Verschlechterung der adhäsiven und kohäsiven Eigenschaften ohne eine signifikante Flexibilisierung zu erzeugen. Überraschenderweise zeigte sich aber, dass die Kombination eines PLA/Weichmacher Blends und PBS nicht zu einer Verschlechterung der Eigenschaften führt, sondern die positiven Eigenschaften des weichgemachten PLA erhalten bleiben und zusätzlich durch die Eigenschaften des PBS weiter verbessert werden. Die Formulierungen werden damit stark flexibilisiert, damit verbunden wird die Schlagzähigkeit erhöht und die Viskosität gleichzeitig verringert, was die Verarbeitung der Klebstoffe in den geplanten Anwendungsbereichen erst möglich macht.

Für die Stabilisierung gegen hydrolytische Zersetzung werden epoxidierte Pflanzenöle verwendet. Besonders geeignet sind epoxidiertes Leinöl oder epoxidiertes Sojabohnenöl, welche in einem Anteil kleiner 1,5% zugesetzt werden und sowohl als Weichmacher als auch als Stabilisatoren bzw. dem Schutz vor Hydrolyse dienen. Für die Erfindung werden bevorzugt epoxidierte Pflanzenöle mit einem Epoxidsauerstoffgehalt von 8,5 - 9,5%, einer Säurezahl von 0,1 - 1,0 [mg KOH/g] und einer Viskosität von ca. 500 bis 1.500 mPa·s bei 25°C eingesetzt. Schmelzklebstoffe werden im industriellen Prozess oft über längere Zeit höheren Temperaturen ausgesetzt. Eine stabile Viskosität ist bei der Verarbeitung der Schmelzklebstoffe eine bedeutende Eigenschaft. Durch die Zugabe von Stabilisatoren kann die Viskositätsverringerung bei einer Temperaturbelastung von 160°C über 24h um bis zu 50% gesenkt werden.

Um einen Schmelzklebstoff aus PLA und PBS zu formulieren, müssen Weichmacher, Harz und Stabilisator alle untereinander kompatibel sein, so dass es zu keiner Phasentrennung kommt. Zusätzlich müssen die Klebeeigenschaften und die Wärmeformbeständigkeit durch die Zusatzstoffe nicht verringert, sondern im besten Fall noch verbessert werden. Eine erfindungsgemäße Schmelzklebstoffformulierung besteht aus 5 bis 45% PLA, 10 bis 55% PBS, 30 bis 55% Harz, bis zu 15% Weichmacher und 0,5 bis 1,5% Stabilisator.

Üblicherweise werden Schmelzklebstoffe im Rührreaktor in einem diskontinuierlichen Verfahren hergestellt. Eine Extrusion erfolgt dabei nur in Ausnahmefällen. Im Rührreaktor sind allerdings höhere Verweilzeiten notwendig, was eine längere Temperaturbelastung der eingesetzten Rohstoffe bedeutet. Die eingesetzten Biopolymere sind wesentlich anfälliger für thermische Zersetzungsprozesse bei längerer Temperaturbelastung, weshalb sich bei der Formulierung der Bioschmelzklebstoffe ein Extrusionsprozess anbietet. Dadurch kann einerseits die Verweilzeit erheblich reduziert werden und andererseits geringere Temperaturen verwendet werden. Eine Unterwassergranulierung mit Schmelzklebstoffen stellt eine zusätzliche Herausforderung dar. Durch ihre Klebrigkeit ist die Herstellung von gleichmäßig geformtem Granulat bei Raumtemperatur (RT) problematisch. Daher wird das Wasserbad im Prozess zusätzlich über einen externen Wärmetauscher auf 5 bis 10 °C gekühlt. Bei der Herstellung der Klebstoffformulierungen werden das PLA und das PBS als Granulat in der Einzugszone bei 20-30 °C zudosiert. Die Harze werden in aufgeschmolzener Form bei ca. 140 - 170°C in der Kompressionszone zugeführt. Über eine weitere Flüssigdosierung wird eine Mischung aus dem Weichmacher und dem Stabilisator in der Kompressionszone eingebracht. Alternativ kann das PLA mit dem Weimacher in einem ersten Schritt bei 140°C - 160°C vorcompoundiert und granuliert werden.

Eine erfindungsgemäße Formulierung enthält 5 bis 45% PLA, 10 bis 55% PBS, 30 bis 55% Harz, 0,5 bis 1,5% epoxidiertes Pflanzenöl und 5 bis zu 15% Weichmacher. Optional können Additive zur Kostenreduzierung bzw. Einfärbung zugesetzt werden. Diese Additive können bis zu 20 Gew.-%, bezogen auf die gesamte Formulierung, ausmachen. Die Additive sind beispielsweise Füllstoffe, Kalk, Farbpigmente oder pyrogene Kieselsäure. Die Additive sind vorzugsweise Partikel mit einem Äquivalent-Kugeldurchmesser von nicht mehr als 150 µm, besonders bevorzugt von 0,1 bis 100 µm, insbesondere von 1 bis 25 µm.

Zur weiteren Verbesserung der Eigenschaften des Schmelzklebstoffs können optional biobasierte Wachse eingearbeitet werden. Diese dienen vorwiegend zur Viskositätssenkung und zur Erniedrigung der offenen Zeiten sowie Abbindezeiten. Als besonders geeignet haben sich Carnauba-, Candelilla-, und Stearinwachse erwiesen. Carnaubawachs ist ein Wachs, das aus den Blättern der in Carnaubapalme gewonnen wird. Carnaubawachs besitzt eine helle gelbliche bis grünliche Farbe und ist das härteste, natürliche Wachs. Es hat einen für Wachse hohen Schmelzpunkt von 80°C bis 87°C.

Candelillawachs ist ein Wachs, das aus den Blättern und Stängeln des Candelilla-Busches gewonnen wird. Es ist hart, brüchig, gelblich-braun und opak bis durchscheinend mit einem Schmelzpunkt von 67 bis 79 °C.

Stearin ist ein Gemisch aus Stearin- und Palmitinsäure, das aus den entsprechenden Triglyceriden durch Verseifung und Ansäuern der Seifenlauge gewonnen wird. Der Schmelzbereich von Stearin liegt je nach Zusammensetzung zwischen 55 und 70 °C.

Für die Erfindung werden bei Raumtemperatur feste Wachse mit einer Erweichungstemperatur von weniger als 90 °C und einer Schmelzviskosität von weniger als 1.000 mPa·s bei 100 °C bevorzugt. Bevorzugte Wachse mit diesen Eigenschaften sind Carnauba-, Candelilla- oder Stearinwachse. Die biobasierten Wachse machen in den erfindungsgemäßen Klebstoffformulierungen bevorzugt 0 bis 20% der Gesamtmasse aus.

Die Schmelzklebstoffe werden als Granulat, Blöcke oder als Klebesticks verwendet. Für schnell laufende Prozesse wie in der Verpackungs- oder Hygieneindustrie werden besonders niedrigviskose Schmelzklebstoffe mit einem schnellen Abbindeverhalten bevorzugt. Daher eignen sich Rezepturen mit einem geringeren Anteil an PLA und PBS (<50%) und einem höheren Anteil an Harz und Weichmacher (>50%). Auch der Fadenzug (Tailing) spielt dort eine besondere Rolle. Dieser soll möglichst gering sein um eine exakte Applizierung zu fördern und Verunreinigung der Anlagen zu minimieren. Durch die Kombination von PLA und PBS im Verhältnis 2:8 bis 8:2 kann ein sehr geringes Tailing erreicht werden.

Die Klebeigenschaften und die Wärmestabilität spielen bei diesen Anwendungen eine sekundäre Rolle, da damit meistens kurzlebige Produkte hergestellt werden. Dabei werden Formulierungen mit einem höheren Weichmachergehalt (>10%) und einem höheren Gehalt an PLA (>40%) bevorzugt. Ein hoher Anteil an PLA sorgt im Vergleich zu PBS für kürzere Abbindezeiten und durch den hohen Weichmachergehalt kann eine niedrige Viskosität erzielt werden.

Für den Buchbindebereich oder die Kantenumleimung in der Holz- und Möbelindustrie spielt die Wärmestabilität und Festigkeit eine bedeutende Rolle. Eine niedrige Viskosität ist nicht zwingend erforderlich. Daher wird für diese Anwendung nur ein geringer Teil an Weichmacher (<5%) und ein hoher Anteil an Polymer (>55%) und Harz (>40%) verwendet. Auch im Heimwerkerbereich für beispielsweise Klebesticks spielt die Viskosität eine untergeordnete Rolle. Wichtig dabei sind ein niedriger Schmelzpunkt und gute Klebeigenschaften um eine gute Handhabung zu gewährleisten.

Die nachfolgenden Beispiele dienen zur Illustration der Erfindung.

### Eingesetzte Rohstoffe

(A1) Basispolymer: Polylactide, CAS-Nummer: 26100-51-6, "Ingeo 4060D" von Natureworks LLC, Schmelzpunkt: 160°C, MFR (210°C /2,16kg)
(A2) Basispolymer: Polybutylensuccinat, CAS-Nummer: 25777-14-4, "Bio-PBS FZ91PM" von Mitsubishi Chemical, Schmelzpunkt: 115°C, MFR (190°C / 2,16kg)
(A3) Basispolymer: Polybutylensuccinat, CAS-Nummer: 25777-14-4, "Bio-PBS FD92PM" von Mitsubishi Chemical, Schmelzpunkt: 84°C, MFR (190°C / 2,16kg)
(A4) Basispolymer: Polyhydroxyalkanoat PHACT a1000p von Helian Polymers BV; Meltflowindex (MFI) bei 160 °C und 5 kg Belastung: 5 g/10 min; amorphes Poly[(R)-3-Hydroxybutyrate-co-4-hydroxybutyrat (P3HB4HB)
(B1) Tackifier: Kolophoniumharz, "^{®}Bremar PP 1181" von Robert Kraemer, Erweichungsbereich: 60 °C bis 80 °C
(B2) Tackifier: Kolophoniumharz, "Bremar PP 1017" von Robert Kraemer, Erweichungsbereich: 80 °C bis 100 °C
(B3) Tackifier: Terpenharz, "^{®}Dertophene H150", von DRT, Erweichungsbereich: 80°C bis 120°C
(B4) Tackifier: Terpenharz, "^{®}Sylvares TP 300", von Kraton, 100 °C bis 130 °C
(B5) Tackifier: Terpenharz, "Sylvares TP 2040, von Kraton, 110 °C bis 140 °C
(B6) Tackifier: Kolophoniumharz, ^{®}Bremar RK 8133 von Robert Kraemer; bei Raumtemperatur flüssig, Viskosität: etwa 9.000 mPa·s bei 60 °C
(B7) Tackifier: Kolophoniumharz, ^{®}Rokrapol RK 6898 von Robert Kraemer; bei Raumtemperatur fest, Schmelzpunkt: 80 °C, Viskosität (160 °C): kleiner als 500 mPa·s
(C1) Weichmacher: Acetyltributylcitrat, CAS-Nummer: 77-90-7
(C2) Weichmacher: Tributylcitrat, CAS-Nummer: 77-94-1
(D1) Wachs: Carnaubawachs, CAS-Nummer: 8015-86-9, "Carnaubawachs LT 124", von TH. C. TROMM, Erstarrungspunkt: 80°C bis 87 °C
(D2) Wachs: Candelillawachs, CAS-Nummer: 8006-44-8, "Candelillawachs LT 281 BI" von TH. C. TROMM, Erstarrungspunkt: 65 °C bis 73 °C
(D3) Wachs: Stearinwachs, CAS-Nummer: 22610-63-5, "TeCe-Stearin I" von TH. C. TROMM, Erstarrungspunkt: 55 °C bis 59 °C
(E1) Stabilisator: Epoxidiertes Leinöl, "^{®}Merginat ELO" von Hobum Oleochemicals, CAS-Nummer: 8016-11-3, Viskosität: 700 mPa·s bis 1.300 mPa·s bei 25°C
(E2) Stabilisator: Epoxidiertes Sojaöl, "Merginat ESBO" von Hobum Oleochemicals, CAS-Nummer: 8013-07-8, Viskosität: 400 mPa·s bis 600 mPa·s bei 20°C

### Methoden

(M1) Ermittlung der Zugscherfestigkeit [MPa] gemäß DIN EN 1465: Zwei Stahlbleche werden mit einer Überlappungsfläche von 12,5 x 25mm verklebt und mit einer Zugprüfmaschine auseinandergezogen. Die ermittelte Zugscherfestigkeit beschreibt die Klebkraft (Adhäsion, Kohäsion) des Klebstoffes.
(M2) Shear Adhesion Failure Temperature (S.A.F.T.)[°C] angelehnt an die ASTM D4498: Zwei Stahlbleche werden mit einer Überlappungsfläche von 25 x 25mm verklebt. Die verklebten Bleche werden aufgehängt und mit einem 200g-Gewicht beschwert. In einem Trockenschrank werden diese dann um 2 °C/min erwärmt. Die Temperatur, bei der sich die Verklebung löst, wird als S.A.F.T. bezeichnet. Sie gibt Auskunft über die Wärmestandfestigkeit des Klebstoffes.
(M3) Schmelzpunkt [°C] gemäß DIN EN ISO 11357: Der Schmelzpunkt wird mittels DSC (differential scanning calorimetry) bestimmt. Der Messbereich ist geht -50 °C bis 200 °C. Die Heizrate ist 20 K/min. (M4) Viskositätsmessung [mPa·s] bei 160°C gemäß DIN EN ISO 3219: Die Viskosität wird mittels Platte-Platte-Rheometer ermittelt. Sie gibt Auskunft über das Verformungs- und Fließverhalten des Klebstoffs bei bestimmten Temperaturen. Bei der Messung wird die Probe zwischen dem rotierenden bzw. oszillierenden und dem ruhenden Teil der Anordnung geschert. Aus der Geometrie der Messanordnung und der Geschwindigkeit des bewegten Teiles ergibt sich die Schergeschwindigkeit. Das zur Aufrechterhaltung der Bewegung notwendige Drehmoment wird gemessen, woraus sich dann die Schubspannung und damit die Viskosität und andere rheologische Kenngrößen ermitteln lassen.
(M5) Offene Zeit [s]: Die offene Zeit definiert sich durch den Zeitraum bis der Klebstoff nicht mehr klebrig ist. Dabei wird in regelmäßigen Zeitabständen ein Holzstäbchen auf eine Klebstoffraupe (Auftrag bei 160°C) gedrückt und abgezogen. Solange das Holzstäbchen anklebt (kohäsiver Bruch), wird der Schmelzklebstoff als "offen" eingestuft. Wenn der Holzstab nicht mehr an der Schmelzklebstoff-Raupe klebt, ist der Schmelzklebstoff nicht mehr offen.
(M6) Abbindezeit [s]: Die Abbindezeit beschreibt die Zeit bis der Klebstoff eine merkliche Kohäsion aufgebaut hat. Dabei wird ein Klebstoffpunkt auf das Ende eines Holzstäbchens aufgetragen. Sofort wird ein gleiches Stäbchen im 90° Winkel angedrückt, so dass es eine Überlappung und Klebefläche entsteht. Gleichzeitig wird die Zeitmessung gestartet. In regelmäßigen Abständen wird händisch versucht, die Stäbchen zu verdrehen (nicht zu stark) und der Zeitpunkt ermittelt, an dem ein Bewegen der Stäbchen nicht mehr möglich ist.

### Beispiel 1:

Für einen typischen Schmelzklebstoff wurden das PLA bei 45°C und die beiden PBS Typen bei 60°C für 4h vorgetrocknet. Die Compoundierung erfolgte in einem Doppelschneckenextruder der Firma Leistritz vom Typ ZSE 27 MAXX mit einer Schneckenlänge von 1,12 m und einem Schneckendurchmesser von 28 mm bei 125 - 160°C, einem Gesamtdurchsatz von 8 - 10 kg/h, einer Schneckendrehzahl von 80 - 150 U/min und einem Solldruck von 5 bar.

Die beiden Typen PBS wurden in einem Granulatmischer vorgemischt, anschließend wurden das PLA und die beiden PBS in der Einzugszone bei 20 - 30 °C über je einen Einzelschneckendosierer vom Typ DS28 der Firma Brabender zudosiert. Das Harz wurde bei 150°C über eine beheizte Flüssigdosierung in der Kompressionszone zugeführt. Die Dosierung des Weichmachers erfolgte bei RT über eine Flüssigdosierung vom Typ FDDW-M-P der Firma Brabender in der Kompressionszone. Die Abfüllung erfolgte über eine Unterwassergranulierung bei 120 - 130°C Austrittstemperatur der Schmelze mit einer Schneidmesserdrehzahl von 500 - 1.500 U/min und einer Wassertemperatur von 5 - 20°C. Auf diese Weise konnten die Rezepturen R1 bis R4, sowie R13 und R14 hergestellt werden. Die Rezepturen sind wegen der hohen Klebkraft und hohen Wärmestabilität besonders für die Textil-, Schuh- und Automobilindustrie geeignet.

### Beispiel 2:

Die Herstellung der Formulierungen erfolgte weitestgehend analog dem Beispiel 1. Um einen niedrigeren Schmelzpunkt zu erzielen wurde auf das höherschmelzende PBS FZ91 verzichtet. Eine Vormischung wie in Beispiel 1 war damit nicht notwendig. In den Formulierungen R7 und R8 wurde zudem ein Terpenharz eigesetzt um die Haftung auf bestimmten Substraten zu verbessern. Dieses Harz wurde bei 170 °C über eine beheizte Flüssigdosierung in der Kompressionszone zugeführt. Auf diese Weise konnten die Rezepturen R5 bis R8 hergestellt werden. Die Rezepturen sind wegen der des niedrigeren Schmelzpunktes besonders für Klebesticks geeignet.

### Beispiel 3

Die Herstellung der Formulierungen erfolgte weitestgehend analog dem Beispiel 1. Um eine höhere Wärmestandfestigkeit zu erzielen wurde auf das niedrigschmelzende PBS FD92 verzichtet. Eine Vormischung wie in Beispiel 1 war damit nicht notwendig.

Das Kolophoniumharz in R9 wurde bei 150 °C und die Terpenharze in R9 - R11 wurden bei 170 °C über eine beheizte Flüssigdosierung in der Kompressionszone zugeführt. Auf diese Weise konnten die Rezepturen R9 bis R12 hergestellt werden. Die Rezepturen sind wegen der hohen Wärmestandfestigkeit und Viskosität besonders für die Kantenumleimung im Holz- und Möbelbereich geeignet.

### Beispiel 4

Die Herstellung der Formulierungen erfolgte weitestgehend analog dem Beispiel 1. Zusätzlich wurden verschiedene Wachse über einen Doppelschneckendosierer vom Typ DDSR20 der Firma Brabender bei 20 °C - 30 °C in der Einzugszone zudosiert. Das Harz wurde bei 150°C über eine beheizte Flüssigdosierung in der Kompressionszone zugeführt. Auf diese Weise konnten die Rezepturen R15 bis R20 hergestellt werden. Der Einsatz von Wachsen verringert die Viskosität, sowie die Verarbeitungszeiten der Klebstoffsysteme. Diese Rezepturen sind daher besonders für schnelle Prozesse, wie sie in Verpackungsbranche üblich sind, geeignet.

### Rezepturen

Hergestellt wie im Beispiel 1 - Verwendung in Schuhindustrie, Textilindustrie, Automobilindustrie

| | | **R1** | **R2** | **R3** | **R4** | **R105** | **R106** | **R107** | **R108** |
|---|---|---|---|---|---|---|---|---|---|
| Ingeo 4060 D | A1 | 7,5 | 7,5 | 15,0 | 44,0 | 25,0 | 25,0 | 15,0 | 45,0 |
| Bio-PBS FZ91 | A2 | 13,0 | 10,0 | 10,0 | 2,5 | 20,0 | 20,0 | 44,0 | 10,0 |
| Bio-PBS FD92 | A3 | 41,0 | 30,0 | 30,0 | 7,5 | | | | |
| PHACT a1000p | A4 | | | | | 15,0 | 15,0 | | |
| Bremar PP1181 | B1 | 35,0 | 49,0 | 39,0 | 30,0 | 39,0 | | | |
| Bremar PP1017 | B2 | | | | | | | | |
| Dertophene H150 | B3 | | | | | | | | |
| Sylvares TP 300 | B4 | | | | | | | | |
| Sylvares TP 2040 | B5 | | | | | | | | |
| Bremar RK 8133 | B6 | | | | | | 29,0 | 20,0 | 44,0 |
| Rokrapol RK 6898 | B7 | | | | | | 10,0 | 20,0 | |
| Acetyltributylcitrat | C1 | 2,5 | 2,5 | 5,0 | 15,0 | | | | |
| Tributylcitrat | C2 | | | | | | | | |
| Carnaubawachs LT 124 | D1 | | | | | | | | |
| Candelillawachs LT 281 BI | D2 | | | | | | | | |
| Stearinwachs TeCe-Stearin I | D3 | | | | | | | | |
| Epoxidiertes Leinöl | E1 | 0,5 | 0,5 | 0,5 | 0,5 | 0,5 | 0,5 | 0,5 | 0,5 |
| Epoxidertes Sojaöl | E2 | 0,5 | 0,5 | 0,5 | 0,5 | 0,5 | 0,5 | 0,5 | 0,5 |
| Summe | | 100,0 | 100,0 | 100,0 | 100,0 | 100,0 | 100,0 | 100,0 | 100,0 |
| Zugscherfestigkeit [MPa] | M1 | 3,1 | 3,3 | 3,0 | 2,3 | 3,2 | 3,5 | 3,3 | 2,7 |
| S.A.F.T. [°C] | M2 | 132,5 | 125,5 | 130,0 | 79,2 | 131,2 | 127,8 | 133,4 | 121,4 |
| Schmelzpunkt [°C] | M3 | 115,5 | 114,9 | 114,2 | 109,5 | 115,4 | 114,8 | 115,4 | 115,7 |
| Viskosität / 160°C [mPa · s] | M4 | 46.100 | 5.900 | 28.700 | 28.900 | 43.000 | 47.700 | 25.400 | 17.500 |
| Offene Zeit / 160°C [s] | M5 | 110 | 140 | 120 | 130 | 90 | 90 | 100 | 110 |
| Abbindezeit / 160°C [s] | M6 | 50 | 90 | 50 | 70 | 40 | 40 | 45 | 55 |

Hergestellt wie in Beispiel 2 - Geringere Schmelztemperatur, Verwendung z.B. in Klebesticks

| | | **R5** | **R6** | **R7** | **R8** | **R109** | **R110** | **R111** | **R112** |
|---|---|---|---|---|---|---|---|---|---|
| Ingeo 4060 D | A1 | 24,0 | 7,5 | 35,0 | 7,5 | 10,0 | 15,0 | 25,0 | 20,0 |
| Bio-PBS FZ91 | A2 | | | | | | | | |
| Bio-PBS FD92 | A3 | 25,0 | 49,0 | 10,0 | 35,0 | 25,0 | 35,0 | 30,0 | 20,0 |
| PHACT a1000p | A4 | | | | | 20,0 | 10,0 | | 15,0 |
| Bremar PP1181 | B1 | 44,0 | 40,0 | | | 44,0 | 40,0 | | |
| Bremar PP1017 | B2 | | | | | | | | |
| Dertophene H150 | B3 | | | 44,0 | 54,0 | | | | |
| Sylvares TP 300 | B4 | | | | | | | | |
| Sylvares TP 2040 | B5 | | | | | | | | |
| Bremar RK 8133 | B6 | | | | | | | 34,0 | 29,0 |
| Rokrapol RK 6898 | B7 | | | | | | | 10,0 | 15,0 |
| Acetyltributylcitrat | C1 | 6,0 | 2,5 | 10,0 | 2,5 | | | | |
| Tributylcitrat | C2 | | | | | | | | |
| Carnaubawachs LT 124 | D1 | | | | | | | | |
| Candelillawachs LT 281 BI | D2 | | | | | | | | |
| Stearinwachs TeCe-Stearin I | D3 | | | | | | | | |
| Epoxidiertes Leinöl | E1 | 0,5 | 0,5 | 0,5 | 0,5 | 0,5 | 0,5 | 0,5 | 0,5 |
| Epoxidertes Sojaöl | E2 | 0,5 | 0,5 | 0,5 | 0,5 | 0,5 | 0,5 | 0,5 | 0,5 |
| Summe | | 100,0 | 100,0 | 100,0 | 100,0 | 100,0 | 101,0 | 100,0 | 100,0 |
| Zugscherfestigkeit [MPa] | M1 | 2,6 | 3,2 | 2,5 | 3,2 | 3,8 | 3,5 | 2,8 | 3,3 |
| S.A.F.T. [°C] | M2 | 81,9 | 83,6 | 84,4 | 79,0 | 82,7 | 84,8 | 84,1 | 86,4 |
| Schmelzpunkt [°C] | M3 | 84,1 | 87,1 | 83,2 | 85,0 | 84,4 | 87,4 | 85,4 | 84,5 |
| Viskosität / 160°C [mPas] | M4 | 8.200 | 41.600 | 37.800 | 43.200 | 34.400 | 37.500 | 35.400 | 48.400 |
| Offene Zeit / 160°C [s] | M5 | 150 | 130 | 120 | 140 | 150 | 130 | 120 | 120 |
| Abbindezeit / 160°C [s] | M6 | 100 | 60 | 70 | 80 | 100 | 80 | 70 | 65 |

Hergestellt wie in Beispiel 3 - Verwendung in Kantenumleimung: Möbelindustrie, Holz- und Möbelindustrie

| | | **R9** | **R10** | **R11** | **R12** | **R115** | **R116** | **R117** | **R118** | **R13** | **R14** |
|---|---|---|---|---|---|---|---|---|---|---|---|
| Ingeo 4060 D | A1 | 20,0 | 15,0 | 19,0 | 23,0 | 25,0 | 20,0 | 25,0 | 25,0 | 15,0 | 34,0 |
| Bio-PBS FZ91 | A2 | 35,0 | 40,0 | 44,0 | 39,0 | 25,0 | 34,0 | 29,0 | 29,0 | 10,0 | 2,5 |
| Bio-PBS FD92 | A3 | | | | | | | | | 30,0 | 12,5 |
| PHACT a1000p | A4 | | | | | 20,0 | 15,0 | 15,0 | 10,0 | | |
| Bremar PP1181 | B1 | 39,0 | | | | 34,0 | 30,0 | | | 29,0 | 20,0 |
| Bremar PP1017 | B2 | | 39,0 | | | | | | | 10,0 | 20,0 |
| Dertophene H150 | B3 | | | | | | | | | | |
| Sylvares TP 300 | B4 | | | 30,0 | | | | | | | |
| Sylvares TP 2040 | B5 | | | | 30,0 | | | | | | |
| Bremar RK 8133 | B6 | | | | | | | 20,0 | 25,0 | | |
| Rokrapol RK 6898 | B7 | | | | | | | 10,0 | 10,0 | | |
| Acetyltributylcitrat | C1 | 5,0 | 5,0 | 6,0 | 7,0 | | | | | | |
| Tributylcitrat | C2 | | | | | | | | | 5,0 | 10,0 |
| Carnaubawachs LT 124 | D1 | | | | | | | | | | |
| Candelillawachs LT 281 BI | D2 | | | | | | | | | | |
| Stearinwachs TeCe-Stearin I | D3 | | | | | | | | | | |
| Epoxidiertes Leinöl | E1 | 0,5 | 0,5 | 0,5 | 0,5 | 0,5 | 0,5 | 0,5 | 0,5 | 0,5 | 0,5 |
| Epoxidertes Sojaöl | E2 | 0,5 | 0,5 | 0,5 | 0,5 | 0,5 | 0,5 | 0,5 | 0,5 | 0,5 | 0,5 |
| Summe | | 100,0 | 100,0 | 100,0 | 100,0 | 105,0 | 100,0 | 100,0 | 100,0 | 100,0 | 100,0 |
| Zugscherfestigkeit [MPa] | M1 | 2,9 | 2,7 | 2,5 | 2,4 | 2,9 | 2,6 | 2,4 | 3,1 | 3,1 | 2,7 |
| S.A.F.T. [°C] | M2 | 127,1 | 135,8 | 137,2 | 130,3 | 134,4 | 132,1 | 134,1 | 129,4 | 122,7 | 98,3 |
| Schmelzpunkt [°C] | M3 | 114,8 | 116,2 | 116,7 | 115,8 | 114,4 | 115,3 | 116,1 | 114,9 | 113,9 | 110,1 |
| Viskosität / 160°C [mPa · s] | M4 | 31.000 | 45.300 | 72.300 | 58.600 | 54.000 | 72.600 | 66.700 | 64.400 | 35.100 | 45.500 |
| Offene Zeit / 160°C [s] | M5 | 120 | 110 | 90 | 100 | 90 | 70 | 80 | 100 | 130 | 140 |
| Abbindezeit / 160°C [s] | M6 | 70 | 60 | 50 | 55 | 50 | 40 | 45 | 55 | 60 | 80 |

Hergestellt wie in Beispiel 5 - Geringere Zugscherfestigkeit, Geringere Viskosität, Geringe Verarbeitungstemperatur, Anwendung: Verpackungsindustrie

| | | **R15** | **R16** | **R17** | **R18** | **R19** | **R20** | **R121** | **R122** | **R123** | **R124** |
|---|---|---|---|---|---|---|---|---|---|---|---|
| Ingeo 4060 D | A1 | 34,0 | 39,0 | 41,5 | 39,0 | | | 30,0 | 30,0 | | |
| Bio-PBS FZ91 | A2 | | | | | 10,0 | 20,0 | | | 10,0 | 10,0 |
| Bio-PBS FD92 | A3 | | | | | 40,0 | 30,0 | | | 25,0 | 20,0 |
| PHACT a1000p | A4 | | | | | | | 15,0 | 10,0 | 34,0 | |
| Bremar PP1181 | B1 | 50,0 | 30,0 | 45,0 | 40,0 | 39,0 | 29,0 | 34,0 | | 10,0 | 10,0 |
| Bremar PP1017 | B2 | | | | | | | | | | |
| Dertophene H150 | B3 | | | | | | | | | | |
| Sylvares TP 300 | B4 | | | | | | | | | | |
| Sylvares TP 2040 | B5 | | | | | | | | | | |
| Bremar RK 8133 | B6 | | | | | | | | 29,0 | | 24,0 |
| Rokrapol RK 6898 | B7 | | | | | | | | 15,0 | | 20,0 |
| Acetyltributylcitrat | C1 | | | | | | | | | | |
| Tributylcitrat | C2 | 10,0 | 15,0 | 7,5 | 10,0 | | | 20,0 | 15,0 | | |
| Carnaubawachs LT 124 | D1 | 5,0 | 15,0 | | | | | | | | |
| Candelillawachs LT 281 BI | D2 | | | 5,0 | 10,0 | | | | | | |
| Stearinwachs TeCe-Stearin I | D3 | | | | | 10,0 | 20,0 | | | 20,0 | 15,0 |
| Epoxidiertes Leinöl | E1 | 0,5 | 0,5 | 0,5 | 0,5 | 0,5 | 0,5 | 0,5 | 0,5 | 0,5 | 0,5 |
| Epoxidertes Sojaöl | E2 | 0,5 | 0,5 | 0,5 | 0,5 | 0,5 | 0,5 | 0,5 | 0,5 | 0,5 | 0,5 |
| Summe | | 100,0 | 100,0 | 100,0 | 100,0 | 100,0 | 100,0 | 100,0 | 100,0 | 100,0 | 100,0 |
| Zugscherfestigkeit [MPa] | M1 | 2,4 | 1,9 | 2,2 | 2,0 | 2,5 | 2,7 | 2,1 | 2,3 | 2,5 | 2,6 |
| S.A.F.T. [°C] | M2 | 63,1 | 58,9 | 67,4 | 60,8 | 124,9 | 122,1 | 71,4 | 66,6 | 124,1 | 122,2 |
| Schmelzpunkt [°C] | M3 | - | - | - | - | 115,7 | 114,3 | - | - | 115,0 | 115,7 |
| Viskosität / 160°C [mPa · s] | M4 | 6.600 | 3.500 | 7.100 | 5.200 | 8.700 | 2.400 | 4.100 | 5.600 | 2.100 | 3.500 |
| Offene Zeit / 160°C [s] | M5 | 70 | 50 | 100 | 80 | 60 | 40 | 60 | 80 | 55 | 60 |
| Abbindezeit / 160°C [s] | M6 | 40 | 20 | 55 | 45 | 25 | 15 | 35 | 50 | 30 | 30 |

| | | | | | | | | | | | |
|---|---|---|---|---|---|---|---|---|---|---|---|
| A1: PLA vom Typ Ingeo 4060D A2: Bio-PBS vom Typ FZ91PM A3: Bio-PBS vom Typ FZ92PM A4: amorphes Poly[(R)-3-Hydroxybutyrat-co-4-hydroxybutyrat (PHACT) B1: Kolophoniumharz vom Typ ^{®}Bremar PP 1181 B2: Kolophoniumharz vom Typ Bremar PP 1017 B3: Terpenharz vom Typ ^{®}Dertophene H150 B4: Terpenharz vom Typ ^{®}Sylvares TP 300 B5: Terpenharz vom Typ Sylvares TP 2040 B6: Kolophoniumharz vom Typ Bremar RK 8133 B7: Kolophoniumharz vom Typ Rokrapol RK 6898 C1: Acetyltributylcitrat (ATBC) C2: Tributylcitrat D1: Wachs vom Typ Carnaubawachs LT 124 D2: Wachs vom Typ Candelillawachs LT 281 BI D3: Wachs vom Typ Stearinwachs TeCe-Stearin I E1: Expoxiertes Leinöl vom Typ ^{®}Merginat ELO E2: Expoxiertes Sojaöl vom Typ Merginat ESBO M1: Zugscherfestigkeit [MPa] M2: Wärmestandfestigkeit [°C] M3: Schmelzpunkt [°C] M4: Viskosität [mPa·s] M5: Offene Zeit[s] M6: Abbindezeit [s] | | | | | | | | | | | |

### Vergleichsbeispiele:

Entsprechend den Angaben zu der als "Resin layer" bezeichneten Schicht in den Beispielen der US 2014/0329065 A1 wurden folgende Rezepturen untersucht:

| Komponente | Bezeichnung | V1 | V2 |
|---|---|---|---|
| Polylactid (PLA) | ^{®}Ingeo 4060D | 100 g | 100 g |
| Polybutylensuccinat (PBS) | PBS FZ91 | --- | 30 g |
| Weichmacher | ATBC | 50 g | 50 g |
| Acrylat-Copolymer | Acrylat-StyrolCopolymer | 10 g | 10 g |
| Stearin | TeCe-Stearin I | 8 g | 8 g |
| Vernetzer | Zitronensäure | 5 g | 5 g |
| Calciumcarbonat | Calciumcarbonat | 50 g | 50 g |
| Summe | | 223 g | 253 g |

Alle Komponenten, bis auf das Calciumcarbonat, wurden für ca. 120 min bei 180 °C in einem Ankerrührwerk vermischt. Nach Zugabe von Calciumcarbonat zeigte die Formulierung eine sehr hohe Viskosität. Das Stearinwachs war nicht verträglich mit Polylactid, was zu Entmischung führte.

Aufgrund der schlechten Homogenität bzw. Verträglichkeit der Komponenten konnten keine Untersuchungen zur Charakterisierung der Mischungen durchgeführt werden. Da ein Tackifier fehlte waren die Adhäsionseigenschaften unzureichend.

## Patentansprüche

1. Schmelzklebstoff-Formulierung umfassend:
mindestens ein Polylactid mit einer Glas-Übergangstemperatur von mehr als 50 °C, einem Schmelzflussindex von mehr als 25 g/10 min, gemessen bei einer Temperatur von 210 °C und einer Belastung mit 2,16 kg, einem gewichtsmittleren Molekulargewicht M_{w} im Bereich von 120.000 bis 280.000 g/mol und einem Hansen-Löslichkeitsparameter von 19,2 bis 21,1 (J/cm³)^{0,5}, wobei der Anteil des mindestens einen Polylactids 5 bis 45 Gew.-% beträgt, bezogen aus das Gesamtgewicht der Schmelzklebstoff-Formulierung;
mindestens ein Polybutylensuccinat mit einem Schmelzflussindex von 3 bis 26 g/10 min, gemessen bei 190 °C und einer Belastung mit 2,16 kg, einem gewichtsmittleren Molekulargewicht M_{w} im Bereich von 60.000 bis 190.000 g/mol und einem Hansen-Löslichkeitsparameter von 20,1 bis 21,2 (J/cm³)^{0,5}, wobei der Anteil des mindestens einen Polybutylensuccinats 10 bis 55 Gew.-% beträgt, bezogen auf das Gesamtgewicht der Schmelzklebstoff-Formulierung;
mindestens ein natürlich vorkommendes Harz mit einer Schmelztemperatur zwischen 60 und 150 °C, einer Schmelzviskosität von 80 bis 24.000 mPa·s bei 140 °C und einem Hansen-Löslichkeitsparameter zwischen 16,0 und 21 (J/cm³)^{0,5}, wobei der Anteil des mindestens einen natürlich vorkommenden Harzes 30 bis 55 Gew.-% beträgt, bezogen auf das Gewicht der Schmelzklebstoff-Formulierung;
mindestens ein Citronensäuretri(C2-C8)alkylester oder Acetylcitronensäuretri(C2-C8)alkylester als Weichmacher in einem Anteil von 5 bis 15 Gew.-%, bezogen auf das Gesamtgewicht der Schmelzklebstoff-Formulierung; und
mindestens ein epoxidiertes Pflanzenöl als Stabilisator in einem Anteil von 0,5 bis 1,5 Gew.-%, bezogen auf das Gesamtgewicht der Schmelzklebstoff-Formulierung.

2. Schmelzklebstoff-Formulierung nach Anspruch 1, **dadurch gekennzeichnet, dass** sie bis zu 20 Gew.-%, bezogen auf das Gesamtgewicht der Schmelzklebstoff-Formulierung, an Additiv(en) enthält, bevorzugt Füllstoffe, Kalk, Farbpigmente oder pyrogene Kieselsäure, wobei die Additive bevorzugt Partikel mit einem Äquivalent-Kugeldurchmesser nicht mehr als 150 µm, besonders bevorzugt von 0,1 bis 100 µm, insbesondere von 1 bis 25 µm, sind.

3. Schmelzklebstoff-Formulierung nach Anspruch 2, **dadurch gekennzeichnet, dass** das Additiv ein bio-basiertes Wachs mit einer Erweichungstemperatur von weniger als 90 °C und einer Schmelzviskosität von weniger als 1.000 mPa·s bei 100 °C ist, bevorzugt ein Carnauba-, Candelilla- oder Stearinwachs.

4. Schmelzklebstoff-Formulierung nach einem oder mehreren der Ansprüche 1 bis 3, **dadurch gekennzeichnet, dass** das epoxidierte Pflanzenöl ein epoxidiertes Leinöl oder ein epoxidiertes Sojabohnenöl ist, jeweils mit einem EpoxidSauerstoffgehalt von 8,5 bis 9,5 Gew.-%, einer Säurezahl von 0,1 bis 1,0 [mg KOH/g] und einer Viskosität von 500 bis 1.500 mPa·s bei 25 °C.

5. Schmelzklebstoff-Formulierung nach einem oder mehreren der Ansprüche 1 bis 4, **dadurch gekennzeichnet, dass** der Citronensäureester Triethylcitrat, Tributylcitrat oder Acetyltributylcitrat ist.

6. Schmelzklebstoff-Formulierung nach einem oder mehreren der Ansprüche 1 bis 5, **dadurch gekennzeichnet, dass** sie eine Kombination aus 50 bis 75 Gew.-% eines Polybutylenesuccinats mit einem Schmelzpunkt bzw. Schmelzbereich von 60 bis 90 °C und 50 bis 25 Gew.-% eines Polybutylensuccinats mit einem Schmelzpunkt bzw. Schmelzbereich von 110 bis 125 °C umfasst.

7. Schmelzklebstoff-Formulierung nach einem oder mehreren der Ansprüche 1 bis 6, **dadurch gekennzeichnet, dass** das natürlich vorkommende Harz ein Harz auf Basis von Kolophonium oder von Terpenen ist, deren Hansen-Löslichkeitsparameter jeweils mehr als 20 (J/cm³)^{0,5} beträgt.

8. Schmelzklebstoff-Formulierung nach einem oder mehreren der Ansprüche 1 bis 7, **dadurch gekennzeichnet, dass** sich die Hansen-Löslichkeitsparameter der im Anspruch 1 genannten Komponenten um nicht mehr als 1,0 (J/cm³)^{0,5}, bevorzugt um nicht mehr als 0,5 (J/cm³)^{0,5}, voneinander unterscheiden.

9. Verwendung der Schmelzklebstoff-Formulierung nach einem oder mehreren der Ansprüche 1 bis 8 als Buchbinderleim, Möbelleim, oder zum Verkleben von Papier, Pappe oder unpolaren Kunststoffen, wie PMMA, ABS, PC oder PET.
